(19) Europäisches Patentamt
European Patent Office
Office européen des brevets

(11) Veröffentlichungsnummer: **0 517 718 B1**

(12) **EUROPÄISCHE PATENTSCHRIFT**

(45) Veröffentlichungstag der Patentschrift: **12.04.95**

(51) Int. Cl.$^{6}$: **C11D 1/825**, C08F 2/30, C08G 65/28

(21) Anmeldenummer: **91903921.4**

(22) Anmeldetag: **19.02.91**

(86) Internationale Anmeldenummer:
**PCT/EP91/00310**

(87) Internationale Veröffentlichungsnummer:
**WO 91/13140 (05.09.91 91/21)**

(54) **GIESSBARES, FLÜSSIGES TENSIDKONZENTRAT.**

(30) Priorität: **01.03.90 DE 4006391**

(43) Veröffentlichungstag der Anmeldung:
**16.12.92 Patentblatt 92/51**

(45) Bekanntmachung des Hinweises auf die Patenterteilung:
**12.04.95 Patentblatt 95/15**

(84) Benannte Vertragsstaaten:
**AT BE CH DE DK ES FR GB GR IT LI LU NL SE**

(56) Entgegenhaltungen:
**EP-A- 29 965**
**EP-A- 129 720**
**DE-A- 282 697**
**DE-B- 1 190 927**

(73) Patentinhaber: **Henkel Kommanditgesellschaft auf Aktien**

**D-40191 Düsseldorf (DE)**

(72) Erfinder: **FEUSTEL, Dieter**
**Fichtestrasse 24**
**D-4019 Monheim 2 (DE)**
Erfinder: **HELD, Uwe**
**Emil-Schniewindstrasse 5**
**D-5620 Velbert 15 (DE)**
Erfinder: **HÖFER, Rainer**
**Klever Strasse 31**
**D-4000 Düsseldorf (DE)**
Erfinder: **ENGELS, Thomas**
**Freiheitsring 42**
**D-5020 Frechen (DE)**

EP 0 517 718 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem Gebiet der oberflächenaktiven Mittel. Sie beschreibt gießbare, flüssige Tensidkonzentrate von nichtionogenen Tensidmischungen in Wasser sowie Verfahren zur Herstellung der Tensidkonzentrate und deren Anwendung als Emulgator bei Polymerisationen.

Anlagerungsprodukte von Ethylenoxid an Alkohole, vor allem Fettalkohole, werden aufgrund ihrer Detergenseigenschaften als nichtionogene Tenside (Niotenside) klassifiziert. Einer noch breiteren Anwendung dieser Anlagerungsprodukte von Ethylenoxid an Alkohole (sog. Alkoholethoxylate) stehen ihre schlechte Gießbarkeit bzw. ihre hohe Viskosität bei Temperaturen im Bereich von 5 bis 20 °C entgegen. Versuche, die Viskosität durch Wasserzugabe zu erniedrigen, führen entweder zu unerwünschter Gelbildung oder aber zu vergleichsweise niedrigkonzentrierten Tensidlösungen.

Aus der deutschen Patentschrift 28 29 697 sind flüssige Detergenszusammensetzungen von Anlagerungsprodukten des Ethylenoxids an Fettalkoholen und Anlagerungsprodukten des Ethylenoxids an innenständige vicinale Alkandiole bekannt, die bei Wasserzugabe nicht gelieren. Innenständige vicinale Diole sind jedoch für eine Reihe von Anwendungen nicht geeignet. Damit sind auch die flüssigen Detergenszusammensetzungen der deutschen Patentschrift 28 29 697 nur begrenzt einsetzbar.

Entsprechendes gilt für die Lehre in der EP-A-129 720. Darin wird die Verwendung der Umsetzungsprodukte von Ethylenoxid mit aliphatischen vicinalen Diolen, die 8 bis 25 C-Atome aufweisen, als Polymerisationsemulgatoren beschrieben. Diese Produkte sind allein oder in Kombination mit anionischen oder nichtionischen Emulgatoren als oberflächenaktive Mittel bei der Herstellung von Polymerlatices auf Basis ethylenisch ungesättigter Monomerer geeignet.

In der EP-A-0 029 965 wird eine Detergenszusammensetzung mit 40 bis 60 Gew.-% Verbindungen der Formel I und 60 bis 40 Gew.-% Verbindungen der Formel II beschrieben. In den Formeln bedeutet $R^1$ einen gesättigten oder ungesättigten Kohlenwasserstoffrest eines Fettalkohols mit 6 bis 18 Kohlenstoffatomen und $R^2$ einen Alkylrest mit 8 bis 14 Kohlenstoffatomen. n ist eine Zahl von 4 bis 15. p und q sind Zahlen von 0 bis 15, wobei die Summe p + q im Bereich von 4 bis 15 liegt. Diese Detergens-Zusammensetzung ist in Wasser löslich.

Der vorliegenden Erfindung lag daher die Aufgabe zugrunde, gießbare, flüssige Tensidkonzentrate bereitzustellen, die derartige innenständige vicinale Diole nicht enthalten.

Gegenstand der vorliegenden Erfindung ist somit ein gießbares, flüssiges Tensidkonzentrat mit einem Gehalt von 50 bis 90 Gew.-% an Tensidmischungen in Wasser, wobei die Tensidmischungen zusammengesetzt sind aus Verbindungen der allgemeinen Formel I

$$R^1 - O - (CH_2 - CH_2O)_n - H \quad (I)$$

in der $R^1$ einen über Kohlenstoff gebundenen gesättigten oder ungesättigten Kohlenwasserstoffrest eines primären Alkohols mit 6 bis 22 C-Atomen und n eine Zahl von 25 bis 60 bedeutet, sowie Verbindungen der allgemeinen Formel II

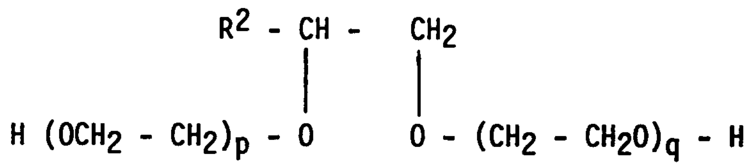

(II)

in der $R^2$ einen über Kohlenstoff gebundenen gesättigten oder ungesättigten Rest mit 8 bis 16 C-Atomen und p und q eine Zahl von 0 bis 25 bedeutet, wobei die Summe von p und q im Bereich von 5 bis 25 liegt.

Bei den Verbindungen der allgemeinen Formel I handelt es sich um Anlagerungsprodukte von Ethylenoxid an gesättigte und/oder ungesättigte primäre Alkohole mit 6 bis 22 C-Atomen und mit einem Ethoxylierungsgrad n von 25 bis 60. Die Herstellung der Anlagerungsprodukte von Ethylenoxid an primäre Alkohole erfolgt nach bekannten Verfahren. Als Ausgangsmaterial können gesättigte und/oder ungesättigte primäre Alkohole mit 6 bis einschließlich 22 C-Atomen, vorzugsweise mit 6 bis 20 C-Atomen eingesetzt werden. Des weiteren können verzweigte, unverzweigte, geradzahlige oder ungeradzahlige primäre Alkohole sowie Mischungen derselben eingesetzt werden. Bevorzugt werden geradzahlige, unverzweigte und gesättigte primäre Alkohole sowie deren Mischungen. Besonders geeignet sind Fettalkoholgemische, wie sie bei der Natriumreduktion oder der katalytischen Hydrierung von Fettsäuregemischen aus der hydrolytischen Spaltung von nativen Fetten und Ölen erhalten werden. Als Beispiele für derartige Fettalkoholgemische sind

die technischen Kokos-, Palmkern-, Talg-, Soja- und Leinölfettalkohole und insbesondere deren Hydrierungsprodukte zu nennen.

Die Ethoxylierung der primären (Fett-)Alkohole bzw. deren Gemische erfolgt bei erhöhter Temperatur und erhöhtem Druck in Gegenwart von geeigneten Alkoxylierungskatalysatoren. Die Wahl des Alkoxylierungskatalysators beeinflußt die Breite des Spektrums von Anlagerungsprodukten, die sogenannte Homologenverteilung, des Ethylenoxids an den Alkohol. So werden in Gegenwart der katalytisch wirkenden Alkalimetallalkoholate wie Natriumethylat Anlagerungsprodukte mit breiter Homogenverteilung erhalten, während beispielsweise in Gegenwart von Hydrotalcit als Katalysator (DE-A-3843713) eine stark eingeengte Homologenverteilung (sogenannte narrow range-Produkte) erfolgt.

Einer besonderen Ausführungsform der vorliegenden Erfindung entsprechend werden die Verbindungen der allgemeinen Formel I hergestellt durch Ethoxylierung von Fettalkoholen mit 6 bis 20 C-Atomen unter Verwendung von katalytisch aktivem Natriumethylat, wobei je nach gefordertem Ethoxylierungsgrad n 25 bis 60 mol Ethylenoxid pro mol Fettalkohol umgesetzt werden.

Verbindungen der allgemeinen Formel II sind als Umsetzungsprodukte von Ethylenoxid mit aliphatischen vicinalen, endständigen Diolen bereits bekannt. So wird in der deutschen Patentschrift 11 90 927 die Umsetzung von 1,2-Diolen mit 8 bis 26 Kohlenstoffatomen mit Ethylenoxid beschrieben. Aus der deutschen Offenlegungsschrift 29 00 030 ist ein Verfahren zur Ringöffnung innenständiger oder endständiger Olefinepoxide, die 6 bis 18 Kohlenstoffatome enthalten, mit mehrfunktionellen Alkoholen wie Ethylenglykol und nachfolgender Ethoxylierung der Reaktionsprodukte bekannt.

Im Rahmen der Erfindung werden Umsetzungsprodukte von Ethylenoxid mit gesättigten oder ungesättigten 1,2-Diolen mit 8 bis 16 C-Atomen als Verbindungen der allgemeinen Formel II eingesetzt. Bevorzugt im Rahmen der Erfindung werden als Verbindungen der allgemeinen Formel II Anlagerungsprodukte von Ethylenoxid an lineare 1,2-Diole mit gerader und ungerader Kohlenstoffzahl oder deren Mischungen. Ganz besonders geeignet sind ethoxylierte 1,2-Diole mit 12 und/oder 14 C-Atomen. Die Herstellung solcher ethoxylierten 1,2-Alkandiole erfolgt in bekannter Weise aus Olefinen und Olefingemischen mit endständigen Doppelbindungen durch Epoxidation und anschließender katalytischer Ringöffnung der resultierenden endständigen Epoxyalkanen mit Ethylenglykol. Die Ringöffnung der 1,2-Epoxyalkane mit Ethylenglykol kann sauer oder basisch katalysiert werden. Bei der sauren Katalyse entstehen etwa zur Hälfte 1-Hydroxy-2-(2-hydroxyethoxy)2-alkane, die 2 primäre Hydroxylgruppen aufweisen und in praktisch gleicher Weise mit Ethylenoxid weiter reagieren können. Weiterhin ist es möglich, die Ringöffnung der 1,2-Epoxyalkane mit einem Überschuß an Ethylenglykol basisch zu katalysieren. Dabei entstehen im wesentlichen 1-(2-Hydroxyethoxy-)-2-hydroxyalkane, die eine primäre und eine sekundäre Hydroxylgruppe aufweisen und mit Ethylenoxid bevorzugt an der primären Hydroxylgruppe weiterreagieren. Im Rahmen der Erfindung werden Verbindungen der allgemeinen Formel II bevorzugt, die durch sauer katalysierte Ringöffnung von endständigen Epoxyalkane mit Ethylenglykol hergestellt worden sind.

Durch Ethoxylierung werden die 1,2-Diole in die Verbindungen der allgemeinen Formel II überführt. Die Ethoxylierung kann nach den bereits im Zusammenhang mit den Verbindungen der allgemeinen Formel I beschriebenen Verfahren erfolgen, die je nach Wahl der Alkoxylierungskatalysatoren zu narrow range-Produkten bzw. zu Produkten mit breiterer Homologenverteilung führen. Vorzugsweise erfolgt die Ethoxylierung der 1,2- Diole unter Verwendung von Natriumethylat, die zu Anlagerungsprodukten mit breiter Homologenverteilung führt. Im Rahmen der Erfindung werden Verbindungen der allgemeinen Formel II eingesetzt, die durch Umsetzung von aliphatischen vicinalen Diolen mit bis zu 25 mol Ethylenoxid pro mol Diol erhalten werden, wobei die beiden Hydroxylgruppen der 1,2-Diole durchaus einen unterschiedlichen Ethoxylierungsgrad p und q aufweisen können. Der Ethoxylierungsgrad p und q kann dabei unabhängig voneinander eine Zahl zwischen 0 bis 25 bedeuten, wobei jedoch gegeben sein muß, daß die Summe von p und q im Bereich von 5 bis 25, vorzugsweise im Bereich von 5 bis 20, bevorzugt im Bereich von 5 bis 15 und insbesondere im Bereich von 8 bis 12 liegt.

Nach einer besonderen Ausführungsform kann die Ethoxylierung der primären Alkohole und der 1,2-Diole nach den bereits beschriebenen Verfahren auch in einem Reaktionsschritt erfolgen, wenn der Ethoxylierungsgrad n der primären Alkohole und der Ethoxylierungsgrad der 1,2-Diole als Summe von p und q im gleichen Bereich liegen.

Das erfindungsgemäße Tensidkonzentrat enthält die Verbindungen der allgemeinen Formel I und die Verbindungen der allgemeinen Formel II als Tensidmischung. Die enthaltenen Tensidmischungen bestehen in der Regel in Mengen von 10 bis 90 Gew.-%, vorzugsweise in Mengen von 30 bis 85 Gew.-% und insbesondere in Mengen von 50 bis 80 Gew.-% aus Verbindungen der allgemeinen Formel I und in Mengen von 10 bis 90 Gew.-%, vorzugsweise in Mengen von 15 bis 70 Gew.-% und insbesondere in Mengen von 20 bis 50 Gew.-% aus Verbindungen der allgemeinen Formel II - bezogen auf nichtwäßrige Anteile der Tensidmischungen -.

Das erfindungsgemäße gießbare, flüssige Tensidkonzentrat besteht aus Tensidmischung und Wasser. Die Tensidmischung ist im erfindungsgemäßen Tensidkonzentrat in Mengen von 50 bis 90 Gew.-%, vorzugsweise in Mengen von 60 bis 90 Gew.-% - bezogen auf Tensidkonzentrat - enthalten.

In einer bevorzugten Ausführungsform der vorliegenden Erfindung enthält das Tensidkonzentrat in Mengen von 60 bis 80 Gew.-% - bezogen auf Tensidkonzentrat - eine Tensidmischung, die zusammengesetzt ist aus Fettalkoholen, die einen Ethoxylierungsgrad n mit einer Zahl zwischen 25 bis 60 aufweisen sowie ethoxylierte 1,2-Diole, wobei der Ethoxylierungsgrad der beiden Hydroxylgruppen p und q eine Zahl von 0 bis 12 bedeutet und die Summe von p und q im Bereich von 8 bis 12 liegt.

Die erfindungsgemäßen Tensidkonzentrate sind über weite Temperaturbereiche flüssig und gießbar. Alle Tensidkonzentrate sind bei Raumtemperatur (20 °C bis 25 °C) flüssig und gießbar. Die untere Grenze des Temperaturbereiches, bei dem die erfindungsgemäßen Tensidkonzentrate noch flüssig und gießbar sind, variiert mit der Zusammensetzung der Tensidmischung, den eingesetzten primären Alkoholen und 1,2-Diolen sowie deren Ethoxylierungsgraden. Prinzipiell kann man sagen, daß die erfindungsgemäßen Tensidkonzentrate über ihren Erstarrungspunkten und vorzugsweise etwa 3 °C über ihren Erstarrungspunkten gießbar sind. Die erfindungsgemäßen Tensidkonzentrate zeigen Viskositätswerte nach Höppler bei 20 °C (DIN 53015) im Bereich von 0,1 bis 2 Pas.

Ein weiterer Gegenstand der vorliegenden Erfindung ist ein Verfahren zur Herstellung der erfindungsgemäßen Tensidkonzentrate. Erfindungsgemäß werden die Verbindungen der allgemeinen Formel I, die nach an sich bekannten Verfahren hergestellt werden, mit Verbindungen der allgemeinen Formel II, die ebenfalls in an sich bekannter Weise hergestellt werden, bei leicht erhöhten Temperaturen, vorzugsweise im Bereich von 40 °C bis 70 °C, unter Rühren miteinander vermengt und unter Rühren mit Wasser in gefordertem Verhältnis bei Temperaturen von 20 °C bis 100 °C, vorzugsweise bei Temperaturen von 40 °C bis 70 °C, versetzt. Sollte bei den gegebenen Temperaturen gegebenenfalls ein Wasserverlust auftreten, so kann nach Abkühlung dieser durch zusätzlichen Wasserzusatz ausgeglichen werden. Erfindungsgemäß werden nach diesem Verfahren flüssige Tensidkonzentrate erhalten, die von 100 Gew.-Teilen 50 bis 90 Gew.-% an Tensidmischung, zusammengesetzt aus Verbindungen der allgemeinen Formel I und Verbindungen der allgemeinen Formel II in Wasser enthalten.

Ein weiterer Gegenstand der vorliegenden Erfindung ist die Verwendung der erfindungsgemäßen Tensidkonzentrate als Emulgator bei der Polymerisation ethylenisch ungesättigter Monomerer. Erfindungsgemäß können die Tensidkonzentrate als alleinige Emulgatoren (Primäremulgatoren) oder auch zusammen mit anionaktiven, nichtionogenen oder kationaktiven Emulgatoren verwendet werden. Im Rahmen der Erfindung werden die Tensidkonzentrate als Emulgator in einer Menge von 0,5 bis 10 Gew.-%, vorzugsweise von 1 bis 5 Gew.-% und insbesondere von 1 bis 3 Gew.-% - berechnet als Tensidkonzentrat und bezogen auf Polymerisationsmischung - verwendet.

Beispiele

## A) Herstellung der Tensidmischungen

Beispiel 1

Ein Fettalkoholgemisch (Komponente A), enthaltend 0 bis 2 Gew.-% n-Decanol ($C_{10}$), 70 bis 75 Gew.-% Laurinalkohol ($C_{12}$), 24 bis 30 Gew.-% Myristinalkohol ($C_{14}$) sowie 0 bis 2 Gew.-% Cetylalkohol ($C_{16}$) wurde in bekannter Weise mit unterschiedlichen Molmengen an Ethylenoxid (siehe Tabelle 1) umgesetzt. Das erhaltene Produkt wurde geschmolzen, was je nach Ethoxylierungsgrad Temperaturen von 40 bis 70 °C erforderte. Unter Rühren wurde zu dem geschmolzenen Produkt Komponente B in verschiedenen Mengen (Tabelle 1) zugegeben. Komponente B wurde hergestellt durch Ringöffnung eines endständig epoxidierten $C_{12}$/- $C_{14}$-Alkangemisches (67 Gew.-% $C_{12}$ und ca. 33 Gew.-% $C_{14}$) mit äquimolaren Mengen an Ethylenglykol - bezogen auf Epoxidgehalt - und durch anschließende Umsetzung mit 10 mol Ethylenoxid.

Beispiel 2

Rindertalgfettalkohol (Komponente A), ein Alkoholgemisch, enthaltend 0 bis 2 Gew.-% Laurinalkohol, 1 bis 7 Gew.-% Myristinalkohol, 20 bis 30 Gew.-% Cetylalkohol, 60 bis 67 Gew.-% Oleinalkohol ($C_{18}$) sowie 0 bis 3 Gew.-% Arachidylalkohol ($C_{20}$), wurde in bekannter Weise mit unterschiedlichen Molmengen an Ethylenoxid (Tabelle 2) ethoxyliert. Das erhaltene Produkt wurde in verschiedenen Mengen (siehe Tabelle 2) mit der gleichen Komponente B umgesetzt, die auch im Beispiel 1 eingesetzt wurde.

Beispiel 3

Das Fettalkoholgemisch (Komponente A) nach Beispiel 1, enthaltend n-Decanol, Laurinalkohol, Myristinalkohol sowie Cetylalkohol, wurde in bekannter Weise in unterschiedlichen Molmengen mit Ethylenoxid (siehe Tabelle 3) versetzt. Das erhaltene Produkt wurde geschmolzen und (je nach Ethoxylierungsgrad bei 40 bis 70 °C) unter Rühren in verschiedenen Mengen mit Komponente B (Tabelle 3) versetzt. Als Komponente B wurde ein Gemisch von endständig epoxidierten $C_{12}/C_{14}$-Alkanen (67 Gew.-% $C_{12}$ und ca. 33 Gew.-% $C_{14}$) eingesetzt, das mittels äquimolaren Mengen an Ethylenglykol ringgeöffnet sowie anschließend mit 7 mol Ethylenoxid umgesetzt worden war.

## B) Herstellung der Tensidkonzentrate

Beispiel 4

Die nach A) erhaltenen Tensidmischungen wurden bei Temperaturen von etwa 40 bis 70 °C mit Wasser in Tensidkonzentrate überführt, die sich im Gesamttensidgehalt und in der Zusammensetzung der Tensidmischung unterschieden. Dabei wurde zu einer bestimmten Menge Tensidmischung soviel Wasser zugegeben, daß jeweils 100 g Tensidkonzentrat entstand. Nach Abkühlung auf Raumtemperatur wurde eventuell auftretender Wasserverlust ausgeglichen. In Tabelle 1 sind die Tensidkonzentrate nach Beispiel 1 getrennt nach Ethoxylierungsgrad des $C_{12}/C_{14}$-Alkoholgemisches und Gesamtgehalt der Formulierung aufgeführt. In den Tabellen 2 und 3 sind analog Tabelle 1 die Tensidkonzentrate nach den Beispielen 2 und 3 getrennt nach Ethoxylierungsgrad des Fettalkoholgemisches und Gesamtgehalt an Tensidmischung im Tensidkonzentrat aufgeführt. Die in allen Tabellen verwendete Schreibweise M/A/B: x °C bedeutet dementsprechend: von 100 Teilen Tensidkonzentrat sind M Gew.-Teile Tensidmischung, wobei die Tensidmischung sich aus A Teilen an Komponente A und B Anteile an Komponente B zusammensetzt. Das Tensidkonzentrat hat einen Erstarrungspunkt bei x °C. Der Erstarrungspunkt wurde nach der kryoskopischen Methode bestimmt, d.h. das Tensidkonzentrat wurde jeweils nach 60 Minuten solange um 2 °C gekühlt, bis Erstarrung eintrat.

Alle Tensidkonzentrate waren bei Raumtemperatur gießbar und zeigten Viskositätswerte nach Höppler bei 20 °C (DIN 53015) bis zu 2 Pas.

Tabelle 1

Tensidkonzentrat, hergestellt nach Beispiel 4, enthaltend Tensidmischungen nach Beispiel 1 mit Fettalkoholgemisch als Komponente A, die einen durchschnittlichen Ethoxylierungsgrad hat von

| 25 EO | 30 EO |
|---|---|
| 60/70/30: 8°C | 60/70/30:12°C |
| 60/60/40: 0°C | 60/60/40:<0°C |
| 60/50/50:<0°C | 60/50/50:<0°C |
| 70/80/20: 8°C | 70/80/20:13°C |
| 70/70/30: 6°C | 70/70/30:11°C |
| 70/60/40: 4°C | 70/60/40: 8°C |
| 70/50/50: 2°C | 70/50/50: 3°C |
| 80/70/30:16°C | |
| 80/60/40:16°C | |
| 80/50/50:14°C | |

60 EO

| | | |
|---|---|---|
| 60/80/20: 5°C | 60/50/50:<0°C | 70/60/40: 9°C |
| 60/70/30: 2°C | 70/80/20:14°C | 70/50/50: 3°C |
| 60/60/40: 0°C | 70/70/30:11°C | 80/50/50:15°C |

Tabelle 2

| Tensidkonzentrat, hergestellt nach Beispiel 4, enthaltend Tensidmischungen nach Beispiel 2 mit Rindertalgfettalkohol als Komponente A, die einen durchschnittlichen Ethoxylierungsgrad hat von | |
|---|---|
| 25 EO | 40 EO |
| 60/50/50: 6 ° C<br>65/60/40: 18 ° C<br>65/50/50: <0 ° C<br>70/50/50: 8 ° C | 60/60/40: 0 ° C<br>60/50/50: <0 ° C<br>65/70/30: 12 ° C<br>65/60/40: 9 ° C<br>65/50/50: 6 ° C<br>70/50/50: 13 ° C |

## Tabelle 3

Tensidkonzentrat, hergestellt nach Beispiel 4, enthaltend Tensidmischung nach Beispiel 3 mit Fettalkoholgemisch als Komponente A, die einen durchschnittlichen Ethoxylierungsgrad hat von

| 25 EO | 30 EO |
|---|---|
| 60/80/20:12°C | 60/80/20: 6°C |
| 60/70/30:<0°C | 60/70/30: 3°C |
| 60/60/40:<0°C | 60/60/40:<0°C |
| 60/50/50:<0°C | 60/50/50:<0°C |
| 65/80/20:16°C | 65/80/20: 4°C |
| 65/70/30:14°C | 65/70/30: 0°C |
| 65/60/40:14°C | 65/60/40:<0°C |
| 65/50/50: 0°C | 65/50/50:<0°C |
| 70/80/20:11°C | 70/80/20:12°C |
| 70/70/30:10°C | 70/70/30: 9°C |
| 70/60/40: 9°C | 70/60/40: 6°C |
| 70/50/50: 0°C | 70/50/50: 4°C |
| 80/70/30:10°C | 80/50/50:14°C |
| 80/60/40:10°C | |
| 80/50/50:10°C | |

| | 60 EO | |
|---|---|---|
| 60/80/20: 8°C | 65/70/30:11°C | 70/60/40:12°C |
| 60/70/30: 2°C | 65/60/40: 6°C | 70/50/50: 8°C |
| 60/60/40: 0°C | 65/50/50: 0°C | 80/50/50:12°C |
| 60/50/50:<0°C | 70/70/30:12°C | |

### C) Vergleichsbeispiele

Beispiel 5

Das Fettalkoholgemisch (Komponente A) nach Beispiel 1, enthaltend n-Decanol, Laurinalkohol, Myristinalkohol sowie Cetylalkohol, wurde in an sich bekannter Weise umgesetzt mit

5.1 40 mol Ethylenoxid,
5.2 50 mol Ethylenoxid,

5.3 60 mol Ethylenoxid.

Das erhaltene ethoxylierte Fettalkoholgemisch wurde bei 40 °C bis 70 °C geschmolzen und bei diesen Temperaturen mit vollentionisiertem Wasser versetzt. Alle nach 5.1 bis 5.3 ethoxylierten Fettalkoholgemische waren als wäßrige Zubereitungen mit Tensidmengen von 50 bis 80 Gew.-% - berechnet als Fettalkoholethoxylat und bezogen auf wäßrige Zubereitung - bei Raumtemperatur gelartig oder fest.

Beispiel 6

Das Fettalkoholgemisch (Komponente A) nach Beispiel 1, enthaltend n-Decanol, Laurinalkohol, Myristinalkohol sowie Cetylalkohol, wurde in an sich bekannter Weise mit 30 mol Ethylenoxid umgesetzt. 70 Gew.-Teile des erhaltenen Produktgemisches wurden geschmolzen (40 bis 70 °C) und unter Rühren mit jeweils 30 Gew.-% folgender Komponenten versetzt:

6.1 mit Nonylphenol, welches mit 10 mol Ethylenoxid umgesetzt worden war,

6.2 mit einem synthetischen Alkoholgemisch, enthaltend 67 Gew.-% eines primären $C_{13}$- und 33 Gew.-% eines primären $C_{15}$-Alkohols, das mit 10,5 mol Ethylenoxid umgesetzt worden war,

6.3 mit 1,1-Dibutylpentan-1-ol, welches mit 10 mol Ethylenoxid umgesetzt worden war.

65 Gew.-Teile der nach 6.1 bis 6.3 erhaltenen Tensidmischungen wurden bei Temperaturen zwischen 40 °C bis 70 °C mit 35 Gew.-Teilen Wasser versetzt. Nach Abkühlung wurden gegebenenfalls auftauchende Wasserverluste ausgeglichen. Die Tensidkonzentrate zeigen alle Erstarrungspunkte über 20 °C, d.h. sie sind bei Raumtemperatur nicht gießfähig.

**D) Verwendung als Emulgator für die Emulsionspolymerisation**

Beispiel 7

Verschiedene Niotenside wurden in ihrer Qualität als Emulgatoren für die Emulsionspolymerisation getestet. Als Monomere wurden 140,0g Ethylacrylat, 140,0 g Methylmethacrylat, 52,5 g Butylacrylat sowie Acrylsäure eingesetzt. Zunächst wurden 10 Gew.-% der jeweiligen Monomere in etwa 600 g vollentionisiertem Wasser gelöst, mit jeweils 2,0 g Na-Laurylsulfat und Kaliumperoxodisulfat versetzt und auf 80 °C erwärmt. Nach Polymerisationsstart wurden 10 g Niotensid und die restlichen Monomergehalte zu der vorgelegten Mischung zugegeben. Nach der Reaktionszeit von etwa 2 1/2 Stunden wurde die Polymerdispersion abgekühlt und mittels eines Filters mit einer lichten Maschenweite von 80 µ filtriert. Die Menge an Feststoff, die im Filter verbleibt, der Koagulatgehalt, wird in Gew.-% an Feststoff angegeben und auf den Feststoffgehalt der Polymerdispersion bezogen.

| Niotensid(-gemisch) | Koagulatgehalt [%] |
|---|---|
| - Nonylphenol-$EO_{30}$ | ca. 3 |
| - $C_{11}$-Synthesealkohol-$EO_{40}$ | ca. 9 |
| - Isotridecylalkohol-$EO_{30}$ | ca. 7 |
| - Rindertalgalkohol-$EO_{40}$ | < 3 |
| - Tensidkonzentrat [65/70/30] mit Tensidmischung nach Bsp. 1 (Komponente A mit 30 EO) | < 1 |

Die Ergebnisse zeigen, daß die erfindungsgemäßen Tensidkonzentrate die Emulsionen während der Polymerisation hervorragend stabilisieren.

Beispiel 8

Verschiedene Niotenside(mischungen) wurden in ihrer Qualität als Emulgatoren für die Emulsionspolymerisation getestet. Als Monomere wurden 240,0 g Styrol, 240,0 g Butylacrylat, 10,0 g Acrylamid sowie 10,0 g Acrylsäure eingesetzt. Zunächst wurden zu 387,5 g Wasser 7,5 g Nonylphenolsulfat-$EO_{28}$, 5,0 g Niotensid(mischung), 10 Gew.-%, der Monomerenmischung und 10 Gew.-% einer Initiatorlösung von 2 g Kaliumperoxodisulfat in 98,0 g Wasser zugesetzt und auf etwa 80 °C bis 85 °C erwärmt. Nach Polymerisationsstart wurden die restlichen Monomere und die restliche Initiatorlösung innerhalb von 2 Stunden zugetropft.

Nach vollständigem Zutropfen wurde die Reaktionsmischung bei den oben genannten Temperaturen etwa 1 1/2 Stunden nachpolymerisiert. Nach Abkühlung wurde die Polymerdispersion mit 3,0 g eines 25 Gew.-%igen Ammoniaks versetzt.

Die Polymerdispersion wurde wie in Bsp. 7 auf den Koagulatgehalt untersucht. Des weiteren wurde die Mindestfilmbildungstemperatur (DIN 53782) der Emulsion, die Teilchengröße als auch die Wasseraufnahme der aus den Dispersionen gezogenen Filme untersucht.

Zur Bestimmung der Wasseraufnahme wurde die Polymerdispersion in eine Teflonform gefüllt (75 x 35 x 5) im Umluft-Trockenschrank bei 50 °C 48 Stunden getrocknet. Das erhaltene Kunststoffstück wurde gewogen und anschließend in vollentionisiertem Wasser 24 Stunden gewässert, oberflächlich mit Zelltuch abgetupft und zurückgewogen.

Die Wasseraufnahme wird in Gew.-% zu dem Gewicht des Kunststoff-Stückes angegeben.

| Niotensid | Koagulat [%] | Teilchengröße [nm] | Wasser-[%] | Mindestfilmbildungstemperatur (°C) |
|---|---|---|---|---|
| Nonylphenol mit 30 EO | 2 | 136 | 4,0 | 19 |
| Tensidkonzentrat [65/70/30], mit Tensidmischung nach Bsp. 1 (Komponente A mit 30 EO) | 2 | 128 | 4,7 | 18 |
| Tensidkonzentrat [65/70/30], mit Tensidmischung nach Bsp. 2 (Komponente A mit 40 EO) | 5 | 132 | 4,4 | 20 |

Beispiel 8 zeigt, daß das toxikologisch bedenkliche, nichtionogene Tensid Nonylphenol mit 30 EO ohne Einbußen bezüglich anwendungstechnischer Eigenschaften durch die erfindungsgemäßen Detergensformulierungen ersetzt werden kann.

## Patentansprüche

1. Gießbares, flüssiges Tensidkonzentrat, wobei die Tensidmischungen zusammengesetzt sind aus Verbindungen der allgemeinen Formel I

   $R^1 - O - (CH_2-CH_2O)_n - H$ (I)

   in der $R^1$ einen über Kohlenstoff gebundenen gesättigten oder ungesättigten Kohlenwasserstoffrest eines primären Alkohols mit 6 bis 22 C-Atomen sowie Verbindungen der allgemeinen Formel II

   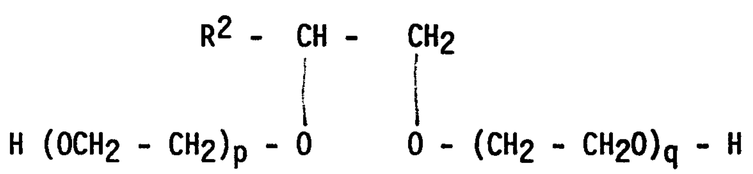

   (II)

   in der $R^2$ einen über Kohlenstoff gebundenen gesättigten oder ungesättigten Rest mit 8 bis 16 C-Atomen und p und q eine Zahl von 0 bis 25 bedeutet, wobei die Summe von p und q im Bereich von 5 bis 25 liegt, gekennzeichnet durch einen Gehalt von 50 bis 90 Gew.-% an Tensidmischungen in Wasser und dadurch, daß n eine Zahl von 25 bis 60 bedeutet.

2. Tensidkonzentrat nach Anspruch 1, dadurch gekennzeichnet, daß es in Mengen von 60 bis 90 Gew.-% Tensidmischungen - bezogen auf Tensid/Wasser-Zubereitung - enthält.

3. Tensidkonzentrat nach einem der Ansprüche 1 oder 2, dadurch gekennzeichnet, daß es Viskositätswerte nach Höppler bei 20°C (DIN 53015) im Bereich von 0,1 bis 2 Pas aufweist.

4. Tensidkonzentrat nach einem der Ansprüche 1 bis 3, dadurch gekennzeichnet, daß es Tensidmischungen enthält, die zusammengesetzt sind aus Verbindungen der allgemeinen Formel I, in der $R^1$ ein

Kohlenwasserstoffrest eines primären Alkoholes mit 6 bis 22 C-Atomen bedeutet sowie Verbindungen der allgemeinen Formel II, in der $R^2$ ein Kohlenwasserstoffrest mit 10 bis 16 C-Atomen, vorzugsweise mit 12 und/oder 14 C-Atomen bedeutet.

**5.** Tensidkonzentrat nach einem der Ansprüche 1 bis 4, dadurch gekennzeichnet, daß es eine Tensidmischung enthält, die zusammengesetzt ist aus Verbindungen der allgemeinen Formel I, in der $R^1$ einen über Kohlenstoff gebundenen gesättigten oder ungesättigten Kohlenwasserstoffrest eines primären Fettalkohols mit 6 bis 20 C-Atomen bedeutet, und aus Verbindungen der allgemeinen Formel II, in der $R^2$ ein Kohlenwasserstoffrest mit 12 und/oder 14 C-Atomen bedeutet.

**6.** Tensidkonzentrat nach einem der Ansprüche 1 bis 5, dadurch gekennzeichnet, daß es eine Tensidmischung enthält, zusammengesetzt aus Verbindungen der allgemeinen Formel I und Verbindungen der allgemeinen Formel II, in der p und q eine Zahl von 0 bis 25 bedeutet und die Summe von p und q im Bereich von 5 bis 25, vorzugsweise im Bereich von 5 bis 20, bevorzugt im Bereich von 5 bis 15 und insbesondere im Bereich von 8 bis 12, liegt.

**7.** Tensidkonzentrat nach einem der Ansprüche 1 bis 6, dadurch gekennzeichnet, daß die enthaltenen Tensidmischungen aus Verbindungen der allgemeinen Formel I in Mengen von 10 bis 90 Gew.%, vorzugsweise von 30 bis 85 Gew.-% und insbesondere von 50 bis 80 Gew.-% und aus Verbindungen der allgemeinen Formel II in Mengen von 10 bis 90, vorzugsweise von 15 bis 70 Gew.-% und insbesondere von 20 bis 50 Gew.-% - bezogen auf nichtwäßrige Tensidmischung - bestehen.

**8.** Tensidkonzentrat nach einem der Ansprüche 1 bis 4, dadurch gekennzeichnet, daß es in Mengen von 60 bis 80 Gew.-% eine Tensidmischung enthält, die zusammengesetzt ist aus Verbindungen der allgemeinen Formel I, in der n eine Zahl zwischen 25 bis 60 bedeutet, und Verbindungen der allgemeinen Formel II, in der p und q eine Zahl von 0 bis 12 bedeutet und die Summe von p und q im Bereich von 8 bis 12 liegt.

**9.** Verfahren zur Herstellung des gießbaren, flüssigen Tensidkonzentrats nach Anspruch 1, dadurch gekennzeichnet, daß die Tensidmischung, die durch Verrühren der Verbindungen der allgemeinen Formeln I und II bei leicht erhöhten Temperaturen hergestellt worden war, mit Wasser im geforderten Verhältnis bei Temperaturen von 20 °C bis 100 °C, vorzugsweise bei Temperaturen von 40 °C bis 70 °C, versetzt wird und gegebenenfalls auftretender Wasserverlust nach Abkühlung ausgeglichen wird.

**10.** Verwendung des gießfähigen, flüssigen Tensidkonzentrats nach Anspruch 1 als Emulgator bei der Emulsionspolymerisation, gegebenenfalls unter Mitverwendung von Anion- oder Kationtensiden.

## Claims

**1.** A pourable liquid surfactant concentrate, the surfactant mixtures consisting of compounds corresponding to general formula I:

$$R^1 - O - (CH_2\text{-}CH_2O)_n - H \qquad (I)$$

in which $R^1$ is a saturated or unsaturated hydrocarbon radical of a primary $C_{6-22}$ alcohol attached by carbon, and of compounds corresponding to general formula II:

$$\begin{array}{ccccc} & R^2 - CH - & CH_2 & & \\ & | & | & & \\ H\,(OCH_2 - CH_2)_p - & O & O - (CH_2 - CH_2O)_q - H & & (II) \end{array}$$

in which $R^2$ is a saturated or unsaturated $C_{8-16}$ radical attached by carbon and p and q are numbers of 0 to 25, the sum of p and q being a number of 5 to 25,
characterized by a content of 50 to 90% by weight of surfactant mixtures in water and in that n is a number of 25 to 60.

2. A surfactant concentrate as claimed in claim 1, characterized in that it contains surfactant mixtures in quantities of 60 to 90% by weight, based on surfactant/water preparation.

3. A surfactant concentrate as claimed in claim 1 or 2, characterized in that it has Höppler viscosity values at 20 °C (DIN 53 015) of 0.1 to 2 Pas.

4. A surfactant concentrate as claimed in any of claims 1 to 3, characterized in that the surfactant mixtures it contains consist of compounds corresponding to general formula I, in which $R^1$ is a hydrocarbon radical of a primary alcohol containing 6 to 22 carbon atoms, and of compounds corresponding to general formula II, in which $R^2$ is a hydrocarbon radical containing 10 to 16 carbon atoms and preferably 12 and/or 14 carbon atoms.

5. A surfactant concentrate as claimed in any of claims 1 to 4, characterized in that the surfactant mixture it contains consists of compounds corresponding to general formula I, in which $R^1$ is a saturated or unsaturated hydrocarbon radical of a primary alcohol containing 6 to 20 carbon atoms attached by carbon, and of compounds corresponding to general formula II, in which $R^2$ is a hydrocarbon radical containing 12 and/or 14 carbon atoms.

6. A surfactant concentrate as claimed in any of claims 1 to 5, characterized in that the surfactant mixture it contains consists of compounds corresponding to general formula I and compounds corresponding to general formula II in which p and q are numbers of 0 to 25 and the sum of p and q is a number of 5 to 25, preferably a number of 5 to 20, more preferably a number of 5 to 15 and most preferably a number of 8 to 12.

7. A surfactant concentrate as claimed in any of claims 1 to 6, characterized in that the surfactant mixtures it contains consist of compounds corresponding to general formula I in quantities of 10 to 90% by weight, preferably 30 to 85% by weight and more preferably 50 to 80% by weight and of compounds corresponding to general formula II in quantities of 10 to 90% by weight, preferably 15 to 70% by weight and more preferably 20 to 50% by weight, based on non-aqueous surfactant mixture.

8. A surfactant concentrate as claimed in any of claims 1 to 4, characterized in that it contains quantities of 60 to 80% by weight of a surfactant mixture consisting of compounds corresponding to general formula I, in which n is a number of 25 to 60, and of compounds corresponding to general formula II, in which p and q are numbers of 0 to 12 and the sum of p and q is a number of 8 to 12.

9. A process for the production of the pourable liquid surfactant concentrate claimed in claim 1, characterized in that water is added to the surfactant mixture - which has been obtained by stirring the compounds corresponding to general formulae I and II at slightly elevated temperatures - in the required ratio at temperatures of 20 to 100 °C and preferably at temperatures of 40 to 70 °C and any water lost is replaced after cooling.

10. The use of the pourable liquid surfactant concentrate claimed in claim 1 as an emulsifier for emulsion polymerization, optionally using anionic or cationic surfactants.

## Revendications

1. Concentré d'agents tensioactifs liquide, apte au ruissellement, dans lequel les mélanges de tensioactifs sont formés de composés de formule générale I :

$$R^1 - O-(CH_2 - CH_2O)_n -H \qquad (I)$$

dans laquelle $R^1$ signifie un reste hydrocarboné saturé ou non saturé, lié par du carbone d'un alcool primaire, ayant de 6 à 22 atomes de carbone,
ainsi que de composés de formule générale II

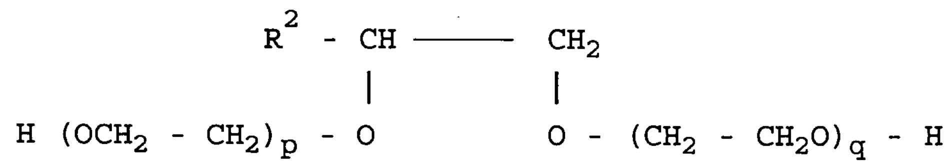

(II)

dans laquelle $R^2$ signifie un reste saturé ou non saturé, lié par du carbone, ayant de 8 à 16 atomes de carbone et, p et q sont des nombres allant de 0 à 25, avec lesquels la somme de p et q se situe dans la zone de 5 à 25,
caractérisé par une teneur allant de 50 à 90 % en poids de mélanges d'agents tensioactifs dans de l'eau et en ce que n signifie un nombre allant de 25 à 60.

**2.** Concentré d'agents tensioactifs selon la revendication 1, caractérisé en ce qu'il renferme des mélanges d'agents tensioactifs en quantités allant de 60 à 90 % en poids rapporté à la préparation agent tensioactif/eau.

**3.** Concentré d'agents tensioactifs selon l'une des revendications 1 à 2, caractérisé en ce qu'il possède des valeurs de viscosité selon Höppler à 20 °C (DIN 53015) dans la zone allant de 0,1 à 2 Pas.

**4.** Concentré d'agents tensioactifs selon l'une des revendications 1 à 3, caractérisé en ce qu'il renferme des mélanges d'agents tensioactifs qui sont formés de composés de formule générale I, dans laquelle $R^1$ signifie un reste hydrocarboné d'un alcool primaire ayant de 6 à 22 atomes de carbone, ainsi que de composés de formule générale II, dans laquelle $R^2$ signifie un reste hydrocarboné ayant de 10 à 16 atomes de carbone, de préférence ayant 12 et/ou 14 atomes de carbone.

**5.** Concentré d'agents tensioactifs selon l'une des revendications 1 à 4, caractérisé en ce qu'il contient un mélange d'agents tensioactifs, qui est formé de composés de formule générale I dans laquelle $R^1$ est un reste hydrocarboné saturé ou non saturé, lié par l'intermédiaire d'un carbone, d'un alcool primaire, ayant de 6 à 20 atomes de carbone, et de composés de formule générale II, dans laquelle $R^2$ signifie un reste hydrocarboné ayant 12 et/ou 14 atomes de carbone.

**6.** Concentré d'agents tensioactifs selon l'une des revendications 1 à 5, caractérisé en ce qu'il contient un mélange d'agents tensioactifs formé de composés de formule générale I et de composés de formule générale II, dans laquelle p et q signifient un nombre allant de 0 à 25 et la somme de p et q se situe dans la zone de 5 à 25, de préférence dans la zone de 5 à 20, préférablement dans la zone de 5 à 15 et en particulier dans la zone de 8 à 12.

**7.** Concentré d'agents tensioactifs selon l'une des revendications 1 à 6, caractérisé en ce que les mélanges d'agents tensioactifs contenus consistent en des composés de formule générale I en quantités allant de 10 à 90 % en poids, de préférence de 30 à 85 % en poids, et en particulier de 50 à 80 % en poids et en des composés de formule générale II en quantités allant de 10 à 90 % en poids de préférence de 15 à 70 % en poids et en particulier de 20 à 50 % en poids, rapportées au mélange d'agents tensioactifs non aqueux.

**8.** Concentré d'agents tensioactifs selon l'une des revendications 1 à 4, caractérisé en ce qu'il renferme un mélange d'agents tensioactifs en quantités allant de 60 à 80 % en poids, qui est composé de substances de formule générale I, dans laquelle n signifie un nombre entre 25 à 60 et de substances de formule générale II, dans laquelle p et q signifient un nombre allant de 0 à 12, et la somme de p et q se situe dans la zone de 8 à 12.

**9.** Procédé d'obtention d'un concentré d'agents tensioactifs liquide, apte au ruissellement, selon la revendication 1, caractérisé en ce que le mélange d'agents tensioactifs qui a été produit par mise en contact des composés de formule générale I et II à des températures légèrement élevées, a été additionné d'eau dans le rapport requis à des températures allant de 20 °C à 100 °C, de préférence à des températures allant de 40 à 70 °C et le cas échéant la perte d'eau qui se produit est compensée après refroidissement.

**10.** Utilisation du concentré d'agents tensioactifs liquide, apte au ruissellement selon la revendication 1 comme agent émulsionnant dans la polymérisation en émulsion, le cas échéant en utilisant conjointement des agents tensioactifs anioniques ou cationiques.